# EUROPEAN PATENT APPLICATION

(11) **EP 2 607 441 A2**
(43) Date of publication of application: **26.06.2013**
(21) Application number: 12198687.1
(22) Date of filing: 20.12.2012
(51) Int. Cl.: C09J 7/02, C09J 151/00, H01M 2/08, H01M 4/66, H01M 2/02, H01M 2/04, H01M 2/16

(54) **Pressure-sensitive adhesive tape for battery, battery using the pressure-sensitive adhesive tape and process for manufacturing a battery**

(30) Priority: 20.12.2011 JP 2011278438; 06.12.2012 JP 2012267337
(71) Applicant: Nitto Denko Corporation, Osaka 567-8680 (JP)
(72) Inventor: Kawabe, Shigeki, Ibaraki-shi, Osaka 567-8680 (JP); Hanai, Hiroomi, Ibaraki-shi, Osaka 567-8680 (JP); Noumi, Shunsuke, Ibaraki-shi, Osaka 567-8680 (JP); Take, Hiroyoshi, Ibaraki-shi, Osaka 567-8680 (JP)
(74) Representative: Grünecker, Kinkeldey, Stockmair & Schwanhäusser

(57) **Abstract**

The present invention relates to a pressure-sensitive adhesive tape for battery containing a substrate and a pressure-sensitive adhesive layer provided on at least one surface of the substrate, in which the pressure-sensitive adhesive layer has a thickness of from 2 µm to 100 µm, and in which the pressure-sensitive adhesive tape has a 180° peeling adhesive force toward an aluminum foil after pressure bonding at 25°C being 0.05 N/10 mm or more and a 180° peeling adhesive force toward an aluminum foil after thermocompression bonding at a temperature of 30°C or higher to lower than 200°C being 0.5 N/10 mm or more.

In preferred embodiments, the pressure-sensitive adhesive layer contains an acid modified thermoplastic elastomer and a tackifier.

## Description

### TECHNICAL FIELD

The present invention relates to a pressure-sensitive adhesive tape for use in battery manufacture, particularly a pressure-sensitive adhesive tape to be applied to a portion which is immersed in an electrolytic solution in a non-aqueous battery or a portion which may come into contact with the electrolytic solution, and a battery obtained using the pressure-sensitive adhesive tape.

### BACKGROUND ART

A pressure-sensitive adhesive tape is used in a battery in which an electrolytic solution is sealed, such as a lithium ion battery, for the purpose of improving insertion competence of an electrode into a battery case and for the purpose of preventing short circuit between the electrodes which may be caused by penetration of a burr or the like existing on an electrode plate through a separator.

As such a pressure-sensitive adhesive tape, there has been widely employed a pressure-sensitive adhesive tape in which an acrylic pressure-sensitive adhesive layer or a natural rubber pressure-sensitive adhesive layer is used as a pressure-sensitive adhesive layer (Patent Document 1 and so on). However, there is a problem that the pressure-sensitive adhesive tape having the above pressure-sensitive adhesive layer is prone to peel off in an electrolytic solution, and then, for example, a pressure-sensitive adhesive component of the layer is dissolved into the electrolytic solution and reacts with an electrolyte thereof to result in deterioration of the electrolytic solution.

Patent Document 2 describes a pressure-sensitive adhesive tape for battery using a pressure-sensitive adhesive which is prone to peel off in the electrolytic solution but is not dissolved or decomposed in the electrolytic solution. According to such a pressure-sensitive adhesive tape, it is possible to prevent the deterioration of the electrolytic solution but there is still a problem that the function of preventing internal short circuit is deteriorated by the peel-off of the pressure-sensitive adhesive tape.

Moreover, in the case where a pressure-sensitive adhesive tape having high adhesiveness is used in the battery manufacture, it is difficult to reattach the tape even when positional deviation or the like occurs at the time of attaching the tape to an adherend and also, since the pressure-sensitive adhesive tape once peeled from the adherend has drastically decreased adhesive force, it is difficult to reuse the tape. Therefore, such a pressure-sensitive adhesive tape is poor in workability and is also uneconomic owing to a high scrappage rate of the pressure-sensitive adhesive tape.

[Patent Document 1] JP-A-2010-55790
[Patent Document 2] JP-A-11-176476

### SUMMARY OF THE INVENTION

Accordingly, an object of the present invention is to provide a pressure-sensitive adhesive tape for battery which shows a slight adhesiveness at room temperature in such a degree that temporary fixing is possible, exhibits an excellent adhesiveness through thermocompression bonding, does not peel off from an adherend even in an electrolytic solution, and is less likely to cause deterioration of the electrolytic solution.
Another object of the present invention is to provide a battery in which the above-mentioned pressure-sensitive adhesive tape for battery is attached to a battery constituent member.

As a result of extensive studies for solving the above problems, the present inventors have found that a pressure-sensitive adhesive tape for battery, which has a pressure-sensitive adhesive layer having a thickness falling within a certain range and has a 180° peeling adhesive force toward an aluminum foil after pressure bonding at 25°C being 0.05 N/10 mm or more and a 180° peeling adhesive force toward the aluminum foil after thermocompression bonding at a temperature of 30°C or higher to lower than 200°C being 0.5 N/10 mm or more, can realize temporary fixing at room temperature and can be easily reattached even when positional deviation occurs and also, since the pressure-sensitive adhesive tape can exhibit excellent adhesiveness when subjected to thermocompression bonding at a temperature of 30°C or higher, the tape can continue to hold an adherend even in an electrolytic solution. Furthermore, they have found that the pressure-sensitive adhesive tape does not peel off even when it is applied to a portion which is immersed in an electrolytic solution in a battery or a portion which may come into contact with the electrolytic solution and can prevent deterioration of the electrolytic solution and generation of internal short circuit. The present invention has been accomplished based on these findings.

That is, the present invention provides a pressure-sensitive adhesive tape for battery containing:
a substrate and
a pressure-sensitive adhesive layer provided on at least one surface of the substrate,
in which the pressure-sensitive adhesive layer has a thickness of from 2 µm to 100 µm, and
in which the pressure-sensitive adhesive tape has a 180° peeling adhesive force toward an aluminum foil after pressure bonding at 25°C being 0.05 N/10 mm or more and a 180° peeling adhesive force toward an aluminum foil after thermocompression bonding at a temperature of 30°C or higher to lower than 200°C being 0.5 N/10 mm or more.

The pressure-sensitive adhesive layer preferably contains a thermoplastic elastomer. The thermoplastic elastomer is particularly preferably an acid-modified thermoplastic elastomer.

The pressure-sensitive adhesive layer preferably contains the thermoplastic elastomer and a tackifier. And the pressure-sensitive adhesive layer more preferably contains the tackifier in an amount of from 5 parts by weight to 50 parts by weight based on 100 parts by weight of the thermoplastic elastomer.

The present invention further provides a battery obtained by attaching the above pressure-sensitive adhesive tape for battery to a battery constituent member.

The present invention further provides a process for manufacturing a battery containing a step of attaching the above pressure-sensitive adhesive tape for battery to a battery constituent member and subjecting them to thermocompression bonding at a temperature of 30°C or higher to lower than 200°C.

The pressure-sensitive adhesive tape for battery according to the present invention is excellent in workability and economical efficiency since temporary fixing is possible at room temperature. Also, thermocompression bonding can be performed at relatively low temperature and thus heating/adhering operation can be promptly performed. Furthermore, excellent adhesiveness can be realized by thermocompression bonding, so that an adherend can be continuously held even in an electrolytic solution. Therefore, in the manufacture of a battery, deterioration of the electrolytic solution and generation of internal short circuit can be prevented by applying the tape to a portion which is immersed in an electrolytic solution in a battery or a portion which may come into contact with the electrolytic solution. In the present invention, the term "thermocompression bonding" means adhesion under a condition of a high temperature of 30°C or higher.

### BRIEF DESCRIPTION OF DRAWINGS

Fig. 1 is a schematic cross-sectional view showing one embodiment of the pressure-sensitive adhesive tape for battery according to the present invention.
Fig. 2 is a schematic cross-sectional view showing another embodiment of the pressure-sensitive adhesive tape for battery according to the present invention.
Figs. 3-1 to 3-3 are schematic views showing a use example of the pressure-sensitive adhesive tape for battery according to the present invention, in a lithium ion battery. Fig. 3-1 is a view before use, Fig. 3-2 is a view showing attachment of the pressure-sensitive adhesive tape for battery according to the present invention to an electrode plate or the like, and Fig. 3-3 is a view showing the electrode plate wound up and fixed using the pressure-sensitive adhesive tape for battery according to the present invention.

### DESCRIPTION OF REFERENCE NUMERALS AND SIGNS

- 1: Substrate
- 2, 21, 22: Pressure-sensitive adhesive layer
- 3, 31, 32: Pressure-sensitive adhesive tape for battery
- 4: Electrode terminal
- 5: Positive-electrode plate
- 6: Negative-electrode plate
- 7: Separator
- 8: Active material

### DETALED DESCRIPTION OF THE INVENTION

The following will describe embodiments of the present invention with reference to Drawings according to need.

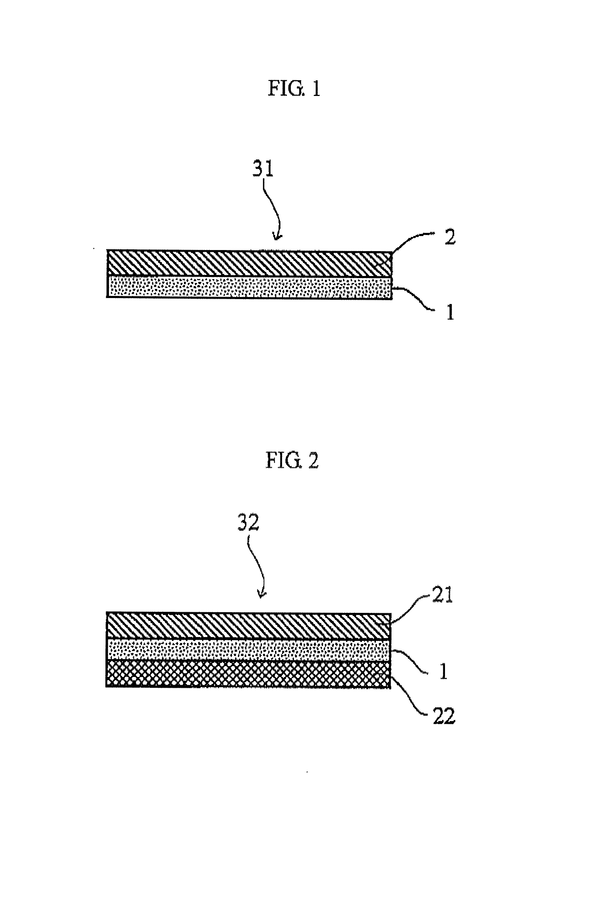

Fig. 1 is a schematic cross-sectional view showing one embodiment of the pressure-sensitive adhesive tape for battery according to the present invention. Here, a pressure-sensitive adhesive tape for battery 31 has a structure that a pressure-sensitive adhesive layer 2 is laminated on one surface of a substrate 1.

Fig. 2 is a schematic cross-sectional view showing another embodiment of the pressure-sensitive adhesive tape for battery according to the present invention. Here, a pressure-sensitive adhesive tape for battery 32 has a structure that a pressure-sensitive adhesive layer 21 is laminated on one surface of a substrate 1 and a pressure-sensitive adhesive layer 22 is laminated on another surface thereof.

### [Pressure-Sensitive Adhesive Layer]

The pressure-sensitive adhesive layer of the present invention imparts, to the pressure-sensitive adhesive tape for battery, a pressure-sensitive adhesive force of a 180° peeling adhesive force toward an aluminum foil after pressure bonding at 25°C being 0.05 N/10 mm or more and a 180° peeling adhesive force toward the aluminum foil after thermocompression bonding at a temperature of 30°C or higher to lower than 200°C being 0.5 N/10 mm or more.

The pressure-sensitive adhesive layer in the present invention preferably contains a thermoplastic elastomer as a base polymer.

As the thermoplastic elastomer, one having a softening point of, for example, 100°C or lower (for example, from about 30°C to 100°C, especially from 50°C to 95°C, particularly from 60°C to 95°C) is preferable in view of being able to reduce damage on an electrode plate during thermocompression bonding and in view of excellence in workability. The softening point of the thermoplastic elastomer can be measured by a ring and ball measuring method, a thermomechanical analysis (TMA), and the like.

Moreover, the thermoplastic elastomer is preferably one which is less likely to deteriorate an electrolytic solution and exhibits excellent adhesiveness through thermocompression bonding. For example, an acid-modified thermoplastic elastomer, a carbonyl-modified thermoplastic elastomer, a hydroxyl group-modified thermoplastic elastomer, an amine-modified thermoplastic elastomer, and the like are preferable. In the present invention, especially, in view of excellence in adhesiveness to a metal substrate such as aluminum, the acid-modified thermoplastic elastomer is preferable. Incidentally, in the present invention, the acid-modified thermoplastic elastomer is a compound obtained by graft polymerization of an unsaturated carboxylic acid (for example, maleic acid or the like) and/or an acid anhydride thereof (for example, maleic anhydride or the like) to a thermoplastic elastomer and, for example, there may be mentioned a compound having the thermoplastic elastomer as a main chain to which the unsaturated carboxylic acid and/or the acid anhydride are bonded through any carbon adjacent to the carbonyl group to form side chains.

The acid-modified thermoplastic elastomer can be prepared by a well-known and commonly used method. For example, it can be prepared by a method of melt-kneading a thermoplastic elastomer (i.e., a thermoplastic elastomer before acid modification) with an unsaturated carboxylic acid or an acid anhydride thereof in the presence of a radical generator such as an organic peracid or a peroxide.

Examples of a monomer component forming the thermoplastic elastomer before acid modification include α-olefins of about 2 carbon atoms to about 10 carbon atoms (preferably 2 carbon atoms to 4 carbon atoms), such as ethylene, propylene, 1-butane, 1-hexene, 3-methyl-1-butene, 4-methyl-1-pentene, 1-heptene, 1-octene, and 1-decene, and styrene. Examples of the thermoplastic elastomer include homopolymers of the above monomer components; random or block copolymers of two or more monomer components selected from the above monomer components; random, block or graft copolymers of the above monomer component with another monomer component; and mixtures thereof.

In the present invention, especially, in view of adhesiveness at room temperature and after heating, random or block copolymers of two or more monomer components selected from the above-mentioned α-olefins and styrene [for example, linear short-chain branched polyethylene (LLDPE), ethylene-propylene copolymer, propene-butene copolymer, ethylene-styrene copolymer, ethylene-butene-styrene copolymer, and ethylene-propylene-styrene copolymer] are preferable.

The graft rate of the acid-modified thermoplastic elastomer can be appropriately adjusted by a known melt-kneading method and, for example, is preferably from about 0.05% by weight to about 10.0% by weight and more preferably from about 0.1% by weight to about 5.0% by weight with respect to the polyolefin grafted. When the graft rate is lower than the above-mentioned range, the adhesiveness exhibited by thermocompression bonding tends to decrease, On the other hand, when the graft rate exceeds the above-mentioned range, an adhesive force toward an aluminum foil at 25°C becomes too strong and hence it tends to become difficult to adjust positional deviation.

As the thermoplastic elastomer in the present invention, use can be made of, for example, commercially available products such as trade name "ARON MELT PPET1600" (manufactured by TOAGOSEI CO., LTD.), trade name "KRATON POLYMER FG1924GT", "KRATON POLYMER FG1901X" (all manufactured by KRATON POLYMER JAPAN K.K.), trade name "TUFTEC M1913", "TUFTEC M1943" (all manufactured by ASAHI KASEI CHEMICALS CORPORATION), and trade name "TOYOTAC PMA-L" (manufactured by TOYOBO CO., LTD.).

The pressure-sensitive adhesive layer in the present invention preferably contains at least the thermoplastic elastomer as a base polymer. The content of the thermoplastic elastomer is, for example, from about 80% by weight to about 100% by weight (preferably 90% by weight to 100% by weight, particularly preferably 95% by weight to 100% by weight) based on total base polymer. When the ratio of the thermoplastic elastomer in the base polymer is adjusted to the above-mentioned range, excellent adhesiveness can be exhibited by thermocompression bonding, so that adherend holding property in an electrolytic solution becomes excellent and deterioration of the electrolytic solution can be improved.

Furthermore, the pressure-sensitive adhesive layer in the present invention preferably contains a tackifier in addition to the base polymer. When the layer contains the tackifier, the adhesiveness exhibited by thermocompression bonding can be further improved and thereby the adherend holding property in an electrolytic solution and the deterioration preventing property of the electrolytic solution can be further improved.

Examples of the tackifier include rosin derivative resins, polyterpene resins, petroleum resins, and oil-soluble phenol resins. In the present invention, especially, it is preferable to use petroleum resins (aromatic petroleum resins or aliphatic petroleum resins). Particularly, in view of low reactivity with components of the electrolytic solution and being less likely to cause deterioration of the electrolytic solution, hydrogenated petroleum resins (saturated aliphatic hydrocarbon resins or hydrogenated aromatic hydrocarbon resins) are preferable.

Moreover, as the tackifier, in view of further improving the adhesiveness exhibited by thermocompression bonding, it is preferable to use one having a softening point of from about 100°C to 150°C (preferably from 110°C to 140°C, particularly preferably from 115°C to 135°C).

In the present invention, use can be suitably made of, for example, commercially available products such as trade name "CLEARON P-125" (manufactured by YASUHARA CHEMICAL CO., LTD., softening point: 125±5°C) and trade name "ARKON P-125" (manufactured by ARAKAWA CHEMICAL INDUSTRIES, LTD., softening point: 125±5°C)_{.}

The use amount of the tackifier is, for example, from about 5 parts by weight to about 50 parts by weight, preferably from 10 parts by weight to 30 parts by weight, and particularly preferably from 15 parts by weight to 30 parts by weight based on 100 parts by weight of the thermoplastic elastomer. When the use amount of the tackifier is in the above-mentioned range, an excellent adhesive force can be exhibited even when thermocompression bonding temperature (temperature at thermocompression bonding) is low (for example, 30°C or higher to lower than 200°C, preferably from 50°C to 150°C, particularly preferably from 70°C to 140°C).

Furthermore, the pressure-sensitive adhesive layer in the present invention may contain other components (for example, appropriate crosslinking agent, plasticizer, filler, and antioxidant) in addition to the base polymer and the tackifier.

As a method for forming the pressure-sensitive adhesive layer in the present invention, a known and commonly used method can be adopted. Examples thereof include a method of diluting the base polymer and the like with a solvent (for example, toluene, xylene, ethyl acetate, or methyl ethyl ketone) used according to need so that the concentration of non-volatile matter becomes about from 5% by weight to 25% by weight to prepare a coating solution and applying (coating) the solution on a substrate or an appropriate separator (such as release paper), followed by drying.

For the application (coating) in the process of forming the pressure-sensitive adhesive layer, a known coating method can be employed and use can be made of a commonly used coater such as a gravure roll coater, a reverse roll coater, a kiss-roll coater, a dip roll coater, a bar coater, a knife coater, a spray coater, a comma coater, a direct coater, and a die coater.

In addition, the pressure-sensitive adhesive layer can be also formed by melt-extrusion molding of a substrate and a pressure-sensitive adhesive constituting the pressure-sensitive adhesive layer. As the melt-extrusion method, any known technologies such as an inflation method and a T-die method can be employed. Moreover, after the extrusion molding, a treatment of drawing in a longitudinal or transverse direction (monoaxial drawing) or treatment of sequential or simultaneous drawing in a longitudinal and transverse direction (biaxial drawing) may be performed.

The pressure-sensitive adhesive layer of the present invention may be a single layer or a laminate of two or more layers. In the case where the pressure-sensitive adhesive layer is the laminate of two or more layers, each layer may have the same composition or pressure-sensitive adhesive layers each having a different composition may be laminated in combination. Moreover, in the case where pressure-sensitive adhesive layers are present on both surfaces of a substrate, these pressure-sensitive adhesive layers may have the same composition or have a different composition with each other.

The total thickness of the pressure-sensitive adhesive layer of the present invention is from 2 µm to 100 µm, especially preferably from 2 µm to 50 µm, and particularly preferably from 2 µm to 20 µm. When the thickness of the pressure-sensitive adhesive layer is less than the above-mentioned range, the adhesiveness exhibited by thermocompression bonding may decrease and the adherend holding property in an electrolytic solution may decrease, so that a function of preventing internal short circuit tends to decrease and workability tends to decrease through the peel-off of the tape during transportation. On the other hand, when the thickness of the pressure-sensitive adhesive layer exceeds the above-mentioned range, a large level unevenness may be generated when the tape is attached to the inside of a battery and formation of the battery tends to be difficult. Moreover, the volume thereof occupied in the battery may become excessively large, which tends to make it difficult to increase the capacity of the battery.

### [Substrate]

The substrate is not particularly limited, and various substrates can be used. Use can be made of, for example, appropriate thin leaf bodies such as fibrous substrates such as cloth, non-woven fabric, felt and net; paper substrates such as various papers; plastic substrates such as films or sheets made of various resins; rubber substrates such as rubber sheets; foamed bodies such as foamed sheets; and laminated bodies thereof. Examples of materials of the plastic substrates include polyesters such as polyethylene terephthalate, polyethylene naphthalate, polybutylene terephthalate and polybutylene naphthalate; polyolefins such as polyethylene, polypropylene and ethylene-propylene copolymer; polyvinyl alcohol; polyvinylidene chloride; polyvinyl chloride; vinyl chloride-vinyl acetate copolymer; polyvinyl acetate; polyamides; polyimides; celluloses; fluororesins; polyethers; polyether amides; polyphenylene sulfides; polystyrene resins such as polystyrene; polycarbonates; and polyethersulfones. The substrate may have either a single layer configuration or a multilayered configuration. When the substrate has a multilayered configuration, each layer may be made of the same material or layers made of different material with each other may be used in combination.

Above all, a plastic substrate is preferred as a substrate in the present invention in view of less likely to dissolve in an electrolytic solution and less likely to cause deterioration of the electrolytic solution. Particularly, a substrate made of polyolefins such as polyimides, polyphenylene sulfides or polypropylene is preferably employed, and in view of inexpensiveness, polypropylene is preferably employed.

Further, in order to increase adhesion with the pressure-sensitive adhesive layer, a surface of the substrate may be subjected to a commonly used surface treatment, for example, an oxidation treatment by a chemical or physical method, such as chromic acid treatment, ozone exposure, flame exposure, high pressure rapid exposure or ionizing radiation treatment, as needed.

Although not particularly limited, the thickness of the substrate is preferably from about 8 µm to about 100 µm, more preferably from about 10 µm to about 50 µm, and particularly preferably from about 10 µm to about 25 µm. When the thickness of the substrate is less than the above-mentioned range, strength of the pressure-sensitive adhesive tape may become excessively low, resulting in a possibility of damaging practicality. On the other hand, when the thickness of the substrate exceeds the above-mentioned range, a large level unevenness may be generated when the layer is attached to the inside of a battery and formation of the battery tends to be difficult. Moreover, the volume thereof occupied in the battery may become excessively large, which tends to make it difficult to increase the capacity of the battery.

### [Pressure-Sensitive Adhesive Tape for Battery]

The pressure-sensitive adhesive tape for battery according to the present invention which has the pressure-sensitive adhesive layer and the substrate can be formed by a known and commonly used method. Examples thereof include a method of diluting the base polymer and the like to prepare a coating solution and applying it directly on the substrate to form the pressure-sensitive adhesive layer and a method of applying the coating solution onto an appropriate separator (such as release paper) to form the pressure-sensitive adhesive layer and transferring the pressure-sensitive adhesive layer to the substrate. In the case where the tape is formed by transfer, voids may remain in the interface between the pressure-sensitive adhesive layer and the substrate. In this case, the voids are diffused by performing heating and pressing treatment by autoclave treatment or the like, whereby the voids can be dissipated.

The pressure-sensitive adhesive tape for battery according to the present invention has a 180° peeling adhesive force toward an aluminum foil after pressure bonding at 25°C (hereinafter sometimes referred to as "180° peeling adhesive force (toward aluminum foil)") being 0.05 N/10 mm or more (for example, 0.05 N/10 mm or more to less than 0.95 N/10 mm, preferably from 0.10 N/10 mm to 0.90 N/10 mm, and particularly preferably from 0.40 N/10 mm to 0.85 N/10 mm). When the 180° peeling adhesive force (toward aluminum foil) is less than the above range, the adhesive force at 25°C may be insufficient and workability tends to decrease. On the other hand, the 180° peeling adhesive force (toward aluminum foil) is excessively large, there may arise a problem that the adherend is damaged at the time of position adjustment and thus reattachment tends to be difficult

The 180° peeling adhesive force (toward aluminum foil) can be measured by a 180° peeling test (in accordance with JIS Z 0237) using an aluminum foil (thickness: 12 µm) as an adherend under conditions of 25°C and 50% RH. For example, after a surface of the pressure-sensitive adhesive layer of the pressure-sensitive adhesive tape for battery according to the present invention is attached to the aluminum foil (thickness: 12 µm), the adhesive force can be measured by 180° peeling under a condition of a tension rate of 300 mm/minute using trade name "AUTOGRAPH AG-I" (manufactured by SHIMADZU CORPORATION).

Moreover, the pressure-sensitive adhesive tape for battery according to the present invention can exhibit an excellent adhesive force through thermocompression bonding at a temperature of 30°C or higher to lower than 200°C (preferably a temperature of the softening point of the thermoplastic elastomer contained in the pressure-sensitive adhesive layer or higher to lower than 200°C, particularly preferably from 50°C to 180°C, most preferably from 80°C to 170°C) and has a 180° peeling adhesive force toward an aluminum foil after thermocompression bonding (hereinafter sometimes referred to as "180° peeling adhesive force after thermocompression bonding (toward aluminum foil)") being 0.5 N/10 mm or more (for example, from 0.5 N/10 mm to 3.0 N/10 mm), preferably 0.95 N/10 mm or more (for example, from 0.95 N/10 mm to 3.0 N/10 mm, preferably from 0.95 N/10 mm to 2.50 N/10 mm), particularly preferably from 1.25 N/10 mm to 2.50 N/10 mm, still more preferably from 1.35 N/10 mm to 2.50 N/10 mm, and further preferably from 1.50 N/10 mm to 2.50 N/10 mm. When the 180° peeling adhesive force after thermocompression bonding (toward aluminum foil) is less than the above-mentioned range, there is a tendency that the tape peels off in an electrolytic solution at the time when it is attached to the inside of a battery and thus it becomes difficult to prevent internal short circuit.

In addition, the pressure-sensitive adhesive tape for battery according to the present invention preferably maintains an pressure-sensitive adhesive force in such a degree that the tape can continue to hold an adherend after immersion in the electrolytic solution and, for example, has a 180° peeling adhesive force (at 25°C) toward an aluminum foil after the tape is attached to the aluminum foil and immersed in an electrolytic solution [ethylene carbonate:diethyl carbonate (volume ratio) = 1:2] at 80°C for 8 hours (hereinafter sometimes referred to as "180° peeling adhesive force (toward aluminum foil) after immersion") being preferably 0.5 N/10 mm or more (for example, from 0.8 N/10 mm or more, more preferably 0.9 N/10 mm or more, particularly preferably from 0.9 to 2.5 N/10 mm). When the 180° peeling adhesive force (toward aluminum foil) after immersion is less than the above-mentioned range, there is a tendency that the tape peels off in an electrolytic solution at the time when it is attached to the inside of a battery and thus it becomes difficult to prevent internal short circuit.

Further, in the pressure-sensitive adhesive tape for battery according to the present invention, a separator (release liner) may be provided on the surface of the pressure-sensitive adhesive layer from the viewpoints of protection of the surface of the pressure-sensitive adhesive layer and prevention of blocking. The separator is removed when the pressure-sensitive adhesive tape for battery according to the present invention is attached to an adherend, and may not necessarily be provided. The separator to be used is not particularly limited, and a known and commonly used release paper or the like can be used. For example, use can be made of a substrate having a release layer such as a plastic film or paper which is subjected to a surface treatment with a release agent such as a silicone, a long chain alkyl, a fluorine or a molybdenum sulfide release agent; a low adhesive substrate formed of a fluorinated polymer such as polytetrafluoroethylene, poly-chlorotrifluoroethylene, polyvinyl fluoride, polyvinylidene fluoride, tetrafluoroethylene-hexafluoropropylene copolymer or chlorofluoroethylene-vinylidene fluoride copolymer; and a low adhesive substrate formed of a non-polar polymer such as an olefin resin (for example, polyethylene or polypropylene).

When the pressure-sensitive adhesive tape for battery according to the present invention is a double-coated pressure-sensitive adhesive tape, the separator may be provided on surfaces of the both pressure-sensitive adhesive layers of the pressure-sensitive adhesive tape for battery according to the present invention. Alternatively, a separator having a rear-side release layer may be provided on a surface of one pressure-sensitive adhesive layer of the pressure-sensitive adhesive tape, and the rear-side release layer of the separator may be allowed to come into contact with a surface of the other pressure-sensitive adhesive layer on the opposite side of the pressure-sensitive adhesive tape by winding the tape.

The pressure-sensitive adhesive tape for battery according to the present invention shows a slight adhesiveness at room temperature and therefore temporary fixing is possible. Further, the pressure-sensitive adhesive tape for battery according to the present invention can exhibit an excellent adhesiveness by thermocompression bonding and can hold an adherend continuously even in an electrolytic solution. Therefore, in the manufacture of a battery in which an electrolytic solution (particularly a non-aqueous electrolytic solution) is sealed, such as a lithium ion battery, generation of internal short circuit can be prevented by applying the tape to a portion which is immersed in the electrolytic solution or a portion which may come into contact with the electrolytic solution, without causing deterioration of the electrolytic solution.

### [Battery]

The battery of the present invention is a battery in which an electrolytic solution (particularly a non-aqueous electrolytic solution) is sealed, such as a lithium ion battery, and is a battery obtained by attaching the above-mentioned pressure-sensitive adhesive tape for battery to a battery constituent member for the purpose of preventing penetration of impurities or burrs through a separator and for the purpose of improving insertion competence of an electrode into a battery case (for example, for the purpose of winding and fixing a winding end of a winding type battery and for the purpose of preventing stripping of an active material).

In the battery such as the lithium ion battery, a positive-electrode plate obtained by coating a positive-electrode core body with a positive-electrode active material and a negative-electrode plate obtained by coating a negative-electrode core body with a negative-electrode active material are provided so as to face each other with the interposition of a separator to form an assembly, and the assembly is wound in a vortex form to obtain a winding type electrode group. The battery has a structure in which the winding type electrode group, electrode terminals drawn out from the positive-electrode plate and the negative-electrode plate, and an electrolytic solution are sealed in an external can.

The non-aqueous electrolytic solution is not particularly limited, and examples thereof include an electrolytic solution in which a mixed solvent of a cyclic carbonate such as propylene carbonate (PC) or ethylene carbonate (EC) and a chain carbonate such as dimethyl carbonate (DMC), ethyl methyl carbonate (EMC) or diethyl carbonate (DEC), and a lithium salt such as LiPF₆ as an electrolyte are dissolved.

The battery such as the lithium ion battery can be manufactured, for example, by laminating the positive-electrode plate, the separator, and the negative-electrode plate in this order to prepare a laminate for battery, placing the obtained laminate in the external can, further injecting the electrolytic solution, and sealing a liquid injection hole.

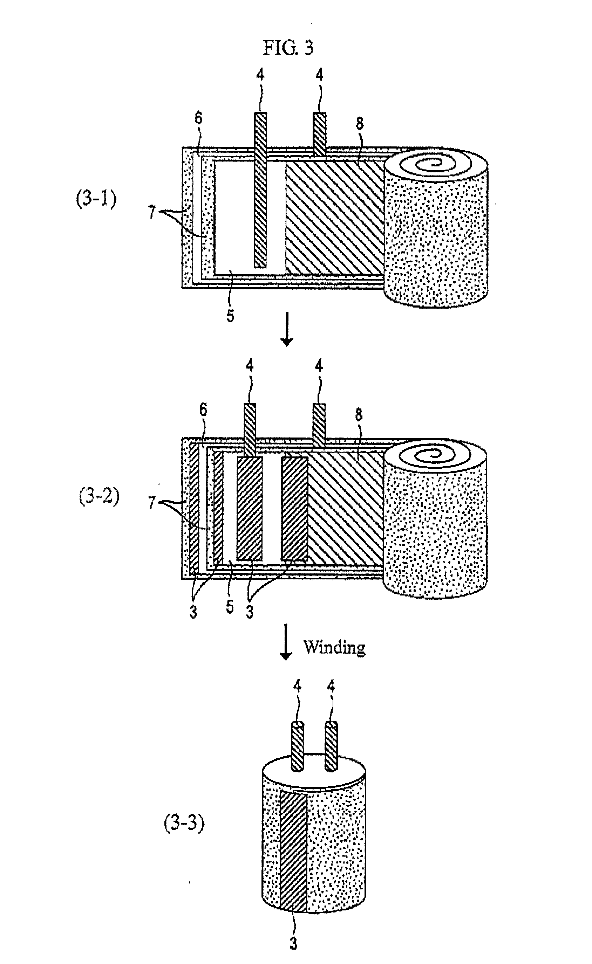

The attachment position of the pressure-sensitive adhesive tape for battery is not particularly limited as long as the above-mentioned object can be accomplished. Examples of the position include an electrode plate of the lithium ion battery, an electrode terminal, an electrode plate end, a portion of the separator with which the electrode plate end comes into contact, an end of the active material, and a winding end (see Figs 3-1 to 3-3).

The battery of the present invention is preferably manufactured via a step of temporary fixing of the pressure-sensitive adhesive tape for battery to the above-mentioned specific position in a battery constituent member under an atmosphere of normal temperature (25°C) and a step of thermocompression bonding at a temperature of 30°C or higher to lower than 200°C (preferably a temperature of a softening point of the thermoplastic elastomer contained in the pressure-sensitive adhesive layer or higher to lower than 200°C, particularly preferably from 50°C to 180°C, most preferably from 80°C to 170°C) under a pressure of 1 kg/cm² or more (for example, from about 1 kg/cm² to about 5 kg/cm²) for from 0.5 second to 30 seconds (preferably from 0.5 second to 10 seconds, more preferably from 0.5 second to 5 seconds). When the temperature at thermocompression bonding is higher than the above-mentioned range, there is a concern that the battery constituent member is damaged. On the other hand, when the temperature at thermocompression bonding is lower than the above-mentioned range, it becomes difficult to exhibit sufficient adhesiveness in some cases. Moreover, when the time for thermocompression bonding is less than the above-mentioned range, sufficient adhesiveness is sometimes not obtained. On the other hand, when the time for thermocompression bonding is more than the above-mentioned range, workability decreases and productivity is impaired in some cases.

Since the process for manufacturing the battery of the present invention uses the above-mentioned pressure-sensitive adhesive tape for battery capable of temporary fixing at room temperature, the process is excellent in workability and economical efficiency, Moreover, thermocompression bonding can be performed at relatively low temperature and the heating/adhering operation can be rapidly performed.

The battery of the present invention obtained by the above-mentioned method hardly causes internal short circuit and also the electrolytic solution is less likely to deteriorate. Therefore, excellent battery properties can be exhibited over a long period of time.

### EXAMPLES

The following will describe the present invention more specifically with reference to Examples, but the present invention should not be construed as being limited to these Examples.

### Example 1

As a substrate, a polypropylene film (trade name "TORAYFAN" manufactured by TORAY INDUSTRIES, INC.) having a thickness of 20 µm was used.
A maleic acid-modified thermoplastic elastomer (trade name "ARON MELT PPET1600", maleic acid-modified styrene-ethylene-butylene copolymer, softening point: 95°C, manufactured by TOAGOSEI CO., LTD.) as a base polymer for forming a pressure-sensitive adhesive layer was diluted with toluene so that the concentration of non-volatile matter became 15% by weight to obtain a coating solution) (1).
The coating solution (1) obtained was applied onto the above-mentioned substrate so as to be a thickness after drying of 2 µm, and dried to form a pressure-sensitive adhesive layer, thereby preparing a pressure-sensitive adhesive tape (1).

### Examples 2 to 5

Each of pressure-sensitive adhesive tapes (2) to (5) were prepared in the same manner as in Example 1 with the exception that the thickness of the pressure-sensitive adhesive layer was changed to the thickness described in Table 1.

### Example 6

A pressure-sensitive adhesive tape (6) was prepared in the same manner as in Example 1 with the exception that a coating solution (2) obtained by diluting 100 parts by weight of the above-mentioned trade name "ARON MELT PPET1600" and 20 parts by weight of a tackifier (trade name "ARKON P-125", manufactured by ARAKAWA CHEMICAL INDUSTRIES, LTD.) with toluene so that the concentration of non-volatile matter became 15% by weight was used instead of the coating solution (1) and the thickness of the pressure-sensitive adhesive layer was changed from 2 µm to 10µm.

### Example 7

A pressure-sensitive adhesive tape (7) was prepared in the same manner as in Example 6 with the exception that a coating solution (3) obtained by changing the addition amount of the tackifier from 20 parts by weight to 10 parts by weight was used and the thickness of the pressure-sensitive adhesive layer was changed from 10 µm to 5µm.

### Example 8

A pressure-sensitive adhesive tape (8) was prepared in the same manner as in Example 6 with the exception that a coating solution (4) obtained by changing the addition amount of the tackifier from 20 parts by weight to 30 parts by weight was used.

### Example 9

A pressure-sensitive adhesive tape (9) was prepared in the same manner as in Example 1 with the exception that a polyphenylene sulfide film (trade name "TORELINA", manufactured by TORAY INDUSTRIES, INC.) having a thickness of 16 µm was used instead of the polypropylene film (trade name "TORAYFAN", manufactured by TORAY INDUSTRIES, INC.) having a thickness of 20 µm as a substrate and the thickness of the pressure-sensitive adhesive layer was changed from 2 µm to 10 µm.

### Example 10

A pressure-sensitive adhesive tape (10) was prepared in the same manner as in Example 1 with the exception that a polyimide film (trade name "KAPTON 50H", manufactured by DU PONT-TORAY CO., LTD.) having a thickness of 12 µm was used instead of the polypropylene film (trade name "TORAYFAN", manufactured by TORAY INDUSTRIES, INC.) having a thickness of 20 µm as a substrate and the thickness of the pressure-sensitive adhesive layer was changed from 2 µm to 10 µm.

### Example 11

A pressure-sensitive adhesive tape (11) was prepared in the same manner as in Example 1 with the exception that a coating solution (5) obtained by diluting 100 parts by weight of a maleic acid-modified thermoplastic elastomer (trade name "KRATON POLYMER FG1924GT", maleic acid-modified styrene-ethylene-butylene copolymer, softening point: 62°C, manufactured by KRATON POLYMER JAPAN K.K.) with toluene so that the concentration of non-volatile matter became 15% by weight was used instead of the coating solution (1) and the thickness of the pressure-sensitive adhesive layer was changed to 10 µm.

### Comparative Example 1

A pressure-sensitive adhesive tape (12) was prepared in the same manner as in Example 1 with the exception that a polyurethane resin-containing adhesive (trade name "CRYSBON AC-946-HV", manufactured by DIC CORPORATION) was used instead of the coating solution (1) and the thickness of the pressure-sensitive adhesive layer was changed to 5 µm.

### Comparative Example 2

A pressure-sensitive adhesive tape (13) was prepared in the same manner as in Comparative Example 1 with the exception that the thickness of the pressure-sensitive adhesive layer was changed to 10 µm.

### Comparative Example 3

A coating solution (6) was obtained by diluting 100 parts by weight of an acrylic copolymer having constituent monomers of 2-ethylhexyl acrylate/ethyl acrylate/hydroxyethyl acrylate (weight ratio: 50 parts by weight/50 parts by weight/5 parts by weight) and 2 parts by weight of an isocyanate crosslinking agent (trade name "CORONATE L", manufactured by NIPPON POLYURETHANE INDUSTRY CO., LTD.) with toluene so that the concentration of non-volatile matter became 15% by weight.
A pressure-sensitive adhesive tape (14) was prepared in the same manner as in Example 1 with the exception that the coating solution (6) was used instead of the coating solution (1) and the thickness of the pressure-sensitive adhesive layer was changed to 10 µm.

### Comparative Example 4

A pressure-sensitive adhesive tape (15) was prepared in the same manner as in Example 1 with the exception that the thickness of the pressure-sensitive adhesive layer was changed to 200 µm.

### Comparative Example 5

A pressure-sensitive adhesive tape (16) was prepared in the same manner as in Example 1 with the exception that the thickness of the pressure-sensitive adhesive layer was changed to 1 µm.

### Comparative Example 6

A coating solution (7) was obtained by diluting a thermoplastic elastomer (trade name "SEPTON 2063", polystyrene block/polyolefin block copolymer, softening point: 106°C, manufactured by KURARAY CO., LTD.) with toluene so that the concentration of non-volatile matter became 15% by weight.
A pressure-sensitive adhesive tape (17) was prepared in the same manner as in Example 1 with the exception that the coating solution (7) was used instead of the coating solution (1) and the thickness of the pressure-sensitive adhesive layer was changed to 10 µm.

**Table 1**

| | Substrate | Pressure-sensitive adhesive layer | | |
|---|---|---|---|---|
| | | Pressure-sensitive adhesive | Thickness (µm) | Tackifier (parts by weight) (parts by weight) |
| Example 1 | PP | acid-modified thermoplastic elastomer | 2 | - |
| Example 2 | PP | acid-modified thermoplastic elastomer | 5 | - |
| Example 3 | PP | acid-modified thermoplastic elastomer | 10 | - |
| Example 4 | PP | acid-modified thermoptastic elastomer | 20 | - |
| Example 5 | pp | acid-modified thermoplastic elastomer | 50 | - |
| Example 6 | PP | acid-modified thermoplastic elastomer | 10 | 20 |
| Example 7 | PP | acid-modified thermoplastic elastomer | 5 | 10 |
| Example 8 | PP | acid-modified thermoplastic elastomer | 10 | 30 |
| Example 9 | PPS | acid-modified thermoplastic elastomer | 10 | - |
| Example 10 | PI | acid-modified thermoplastic elastomer | 10 | - |
| Example 11 | PP | maleic acid-modified thermoplastic elastomer | 10 | - |
| Comparative Example 1 | PP | polyurethane resin | 5 | - |
| Comparative Example 2 | PP | polyurethane resin | 10 | - |
| Comparative Example 3 | PP | acrylic resin | 10 | - |
| Comparative Example 4 | PP | acid-modified thermoplastic elastomer | 200 | - |
| Comparative Example 5 | PP | acid-modified thermoplastic elastomer | 1 | - |
| Comparative Example 6 | PP | thermoplastic elastomer | 10 | - |

For the pressure-sensitive adhesive tapes obtained in Examples and Comparative Examples, adhesiveness, workability, and electrolytic solution deterioration preventing property were evaluated by the following methods.

### [Adhesiveness]

Each of the pressure-sensitive adhesive tapes obtained in Examples and Comparative Examples was subjected to pressure bonding to an aluminum foil with imparting a pressure of 2 kg/cm² at ordinary temperature (25°C) for 2 seconds to obtain a test specimen.
For the test specimen obtained, force required at the time of peeling the pressure-sensitive adhesive tape from the aluminum foil at ordinary temperature (25°C) at a peeling rate of 300 mm/min at a peeling angle of 180° [180° peeling pressure-sensitive adhesive force (toward aluminum foil)] (N/10 mm) was measured using a precision universal tester (trade name "AUTOGRAPH AG-1", manufactured by SHIMADZU CORPORATIONS and was taken as the adhesive force after pressure bonding at 25°C.

Moreover, each of the pressure-sensitive adhesive tapes obtained in Examples and Comparative Examples was subjected to thermocompression bonding with imparting a pressure of 2 kg/cm² at the temperature described in Table 2 for 2 seconds to obtain a test specimen.
For the test specimen obtained, force required at the time of peeling the pressure-sensitive adhesive tape from the aluminum foil [180° peeling pressure-sensitive adhesive force (toward aluminum foil) after thermocompression bonding] (N/10 mm) was measured in the same manner as mentioned above and was taken as the adhesive force after thermocompression bonding.

Furthermore, the test specimen (test specimen after pressure bonding at room temperature or test specimen after thermocompression bonding) was immersed at 80°C for 8 hours in an electrolyte solution obtained by mixing ethylene carbonate and diethyl carbonate in a weight ratio of 1:1, Thereafter, for the test specimen taken up from the electrolytic solution, force required at the time of peeling the pressure-sensitive adhesive tape from the aluminum foil [180° peeling pressure-sensitive adhesive force (toward aluminum foil) after immersion] (N/10 mm) was measured in the same manner as mentioned above and was taken as the adhesive force after electrolytic solution immersion. Incidentally, the case where the aluminum foil was destroyed by the above-mentioned adhesiveness test without peel-off of the pressure-sensitive adhesive tape was rated as "A (aluminum foil destruction)". On the other hand, the case where the aluminum foil peeled off within the immersion time (8 hours) was rated as "B".

### [Workability]

A lithium ion secondary battery was assembled by the following method and workability was evaluated according to the following criteria.

### Evaluation Criteria:

The case capable of preparation without particular problems: A
The case falling under one or more of the following items: B
Temporary fixing was impossible (adhesive force at room temperature was less than 0.05 N/10 mm)
Adhesive force after thermocompression bonding was insufficient (less than 0.5 N/10 mm)
Substrate was degraded/damaged by thermocompression bonding (for example, substrate was curled in a degree of 10 mm or more)
Level unevenness from active material was 100 µm or more

### <Positive-Electrode Sheet>

A slurry was prepared by mixing 85 parts by weight of lithium cobaltate (trade name "CELLSEED C-10", manufactured by NIPPON CHEMICAL INDUSTRIAL CO., LTD.) as a positive-electrode active material, 10 parts by weight of acetylene black (trade name "DENKA BLACK", manufactured by DENKI KAGAKU KOGYO KABUSHIKI KAISHA) as a conductive aid, and 5 parts by weight of vinylidene fluoride resin (trade name "KUREHA KF POLYMER L #1120", manufactured by KUREHA CORPORATION) as a binder and diluting the mixture using N-methyl-2-pyrrolidone so that the concentration of non-volatile matter became 15% by weight.
The slurry was applied on an aluminum foil (collector) having a thickness of 20 µm so as to be a thickness of 200 µm. Thereafter, the coated film was dried at 80°C for 1 hour and at 120°C for 2 hours and then was pressed by a roll press to prepare a sheet whose positive-electrode active material layer had a thickness of 100 µm.
Using the sheet, a positive-electrode sheet having a positive-electrode active material part of 27 mm square and having a tab-attaching part was prepared. Then, an aluminum-made tab was spot-welded to the tab-attaching part of the positive-electrode sheet to form a flag type positive-electrode sheet. Each of the pressure-sensitive adhesive tapes obtained in Examples and Comparative Examples was attached to a boundary between a positive-electrode active material layer-applied part and an unapplied part so as to overlap with the positive-electrode active material layer.

### <Negafive-Electrode Sheet>

A slurry was prepared by mixing 80 parts by weight of mesocarbon microbeads (trade name "MCMB6-28", manufactured by OSAKA GAS CHEMICALS CO., LTD.) as a negative-electrode active material, 10 parts by weight of acetylene black (trade name "DENKA BLACK", manufactured by DENKI KAGAKU KOGYO KABUSHIKI KAISHA) as a conductive aid, and 10 parts by weight of vinylidene fluoride resin (trade name "KUREHA KF POLYMER L #1120", manufactured by KUREHA CORPORATION) as a binder and diluting the mixture using N-methyl-2-pyrrolidone so that the concentration of non-volatile matter became 15% by weight.
The slurry was applied on a copper foil (collector) having a thickness of 20 µm so as to be a thickness of 200 µm. Thereafter, the coated film was dried at 80°C for 1 hour and at 120°C for 2 hours and then was pressed by a roll press to prepare a sheet whose negative-electrode active material layer had a thickness of 100 µm. Using the sheet, a negative-electrode sheet having a negative-electrode active material part of 29 mm square and having a tab-attaching part was prepared. Then, a nickel-made tab was spot-welded to the tab-attaching part of the negative-electrode sheet to form a flag type negative-electrode sheet.

### <Separator>

As a separator, a polypropylene porous film (trade name "CELGARD", thickness: 25 µm, porosity: 41%) was used.

### <Battery Preparation>

The above positive-electrode sheet, separator, and negative-electrode sheet were laminated in this order to prepare a laminate for battery. The obtained laminate for battery was placed in an aluminum laminate package and further an electrolytic solution obtained by dissolving lithium hexafluorophosphate (LiPF₆) in a mixed solvent of ethylene carbonate/diethyl carbonate (volume ratio: 1/2) in a concentration of 1.4 mol/L was injected thereto. Then, the package was sealed to assemble a lithium ion secondary battery.

### [Electrolytic Solution deterioration Preventing Property]

The lithium ion secondary battery prepared by the above-mentioned method was charged at 0.2 CmA and a voltage of 4.2 V in a constant-current and constant-voltage manner. Thereafter, a circuit between the electrodes was opened and the battery was placed in an oven at 80°C for 20 days. Thereafter, a battery voltage variation (V) was measured and a voltage maintaining property was verified, thereby evaluating the electrolytic solution deterioration preventing property.

The evaluation results are collected in the following Table 2.

**Table 2**

| | Adhesive force after pressure bonding at 25°C (N/10 mm) | At thermocompression bonding | | Adhesive force after electrolytic solution immersion (N/10 mm) | Workability | Battery voltage variation (V) | Overall Judgment |
|---|---|---|---|---|---|---|---|
| | | Temperature at thermocompression bonding (°C) | Adhesive force (N/10 mm) | | | | |
| Ex. 1 | 0.06 | - | - | 0.95 | A | -0.27 | A |
| | 0.06 | 130 | 0.96 | 1.00 | A | -0.25 | A |
| Ex. 2 | 0.47 | - | - | 0.85 | A | -0.25 | A |
| | 0.47 | 130 | 1.26 | 1.26 | A | -0.26 | A |
| Ex.3 | 0.80 | - | - | 0.93 | A | -0.26 | A |
| | 0.80 | 130 | 1.32 | 2.12 | A | -0.25 | A |
| | 0.80 | 160 | 1.86 | A (aluminum foil destruction) | A | -0.28 | A |
| Ex.4 | 0.82 | 130 | 2.12 | A (aluminium foil destruction) | A | -0.27 | A |
| Ex. 5 | 0.91 | 130 | 1.36 | A (aluminum foil destruction) | A | -0.27 | A |
| Ex. 6 | 0.20 | 90 | 0.96 | A (aluminium foil destruction) | A | -0.25 | A |
| Ex. 7 | 0.38 | 130 | 1.45 | A (aluminium foil destruction) | A | -0.25 | A |
| Ex. 8 | 0.28 | 130 | 1.75 | A (aluminum foil destruction) | A | -0.25 | A |
| Ex. 9 | 0.88 | 130 | 1.45 | 2.05 | A | -0.26 | A |
| Ex.10 | 0.66 | 130 | 1.09 | 1.75 | A | -0.26 | A |
| Ex. 11 | 0.88 | - | - | 1.20 | A | -0.23 | A |
| | 0.88 | 130 | 1.53 | A (aluminum foil destruction) | A | -0.23 | A |
| Comp.Ex. 1 | 0.76 | 130 | 0.96 | B (peeled off within 3 hrs) | A | -0.35 | B |
| Comp.Ex. 2 | 1.02 | 160 | 1.52 | B (peeled off within 4 hrs) | A | -0.40 | B |
| Comp. Ex. 3 | 1.04 | - | - | B (peeled off within 2 hrs) | A | -0.35 | B |
| Comp. Ex. 4 | 1.05 | 130 | 2.98 | A (aluminum foil destruction) | B^{*1} | -0.4 | B |
| Comp. Ex. 5 | 0.01 | 130 | 0.40 | B (peeled off within 5 hrs) | B⁻² | -0.35 | B |
| Comp. Ex. 6 | 0.01 | 130 | 0.01 | B (peeled off within 2 hrs) | B⁻³ | -0.45 | B |

| | | | | | | | |
|---|---|---|---|---|---|---|---|
| *1 (level unevenness from positive-electrode active material layer was excessively large) *2, *3 (Temporary fixing was impossible) | | | | | | | |

While the present invention has been described in detail with reference to the specific embodiments thereof, it will be apparent to one skilled in the art that various changes and modifications can be made therein without departing from the spirit and scope of the present invention.
The present application is based on the Japanese Patent Application No. 2011-278438 filed on December 20, 2011 and Japanese Patent Application No. 2012-267337 filed on December 6, 2012, and the entire contents thereof are incorporated herein by reference. All references cited herein are incorporated in their entirety.

## Claims

1. A pressure-sensitive adhesive tape for battery comprising:
a substrate and
a pressure-sensitive adhesive layer provided on at least one surface of the substrate,
wherein the pressure-sensitive adhesive layer has a thickness of from 2 µm to 100 µm, and
wherein the pressure-sensitive adhesive tape has a 180° peeling adhesive force toward an aluminum foil after pressure bonding at 25°C being 0.05 N/10 mm or more and a 180° peeling adhesive force toward an aluminum foil after thermocompression bonding at a temperature af 30°C or higher to lower than 200°C being 0.5 N/10 mm or more.

2. The pressure-sensitive adhesive tape for battery according to claim 1, wherein the pressure-sensitive adhesive layer contains a thermoplastic elastomer.

3. The pressure-sensitive adhesive tape for battery according to claim 2, wherein the thermoplastic elastomer is an acid-modified thermoplastic elastomer.

4. The pressure-sensitive adhesive tape for battery according to claim 2 or 3, wherein the pressure-sensitive adhesive layer further contains a tackifier.

5. The pressure-sensitive adhesive tape for battery according to claim 4, wherein the pressure-sensitive adhesive layer contains the tackifier in an amount of from 5 parts by weight to 50 parts by weight based on 100 parts by weight of the thermoplastic elastomer.

6. A battery obtained by attaching the pressure-sensitive adhesive tape for battery according to any one of claims 1 to 5 to a battery constituent member.

7. A process for manufacturing a battery comprising a step of attaching the pressure-sensitive adhesive tape for battery according to any one of claims 1 to 5 to a battery constituent member and subjecting them to thermocompression bonding at a temperature of 30°C or higher to lower than 200°C.
